# EUROPÄISCHE PATENTANMELDUNG

(11) **EP 2 431 975 A1**
(43) Veröffentlichungstag der Anmeldung: **21.03.2012**
(21) Anmeldenummer: 11150968.3
(22) Anmeldetag: 14.01.2011
(51) Int. Cl.: G11B 27/10, G11B 27/28, G10H 1/36, G06F 17/30

(54) **Vorrichtung und verfahren zur musiksynchronen wiedergabe von visualisierungen**

(30) Priorität: 17.09.2010 DE 102010045891
(71) Anmelder: Cukierski, Peter, 22763 Hamburg (DE)
(72) Erfinder: Cukierski, Peter, 22763 Hamburg (DE)
(74) Vertreter: von Kreisler Selting Werner

(57) **Zusammenfassung**

Bei einem verbesserten Verfahren zum musiksynchronen Wiedergeben von Visualisierungen (a, b) wird Musik (28) empfangen und analysiert. Aus der Analyse der empfangenen Musik (28) wird zukünftig zu empfangende Musik (28) vorhergesagt. Die Visualisierungen (a, b) werden mit der vorhergesagten Musik (30) synchronisiert. Die synchronisierten Visualisierungen (a, b) werden zusammen mit zukünftig empfangener Musik (28) ausgegeben. Eine entsprechende Vorrichtung (10) wird ebenfalls bereit gestellt.

## Beschreibung

Die Erfindung betrifft ein Verfahren und eine Vorrichtung zur musiksynchronen Wiedergabe von Visualisierungen.

Visualisierungen können in Form von Fotos, Computeranimationen, Videos und/oder Videoanimationen zusammen mit Musik wiedergegeben werden, um die auditiven Eindrücke der Musik durch angepasste optische Eindrücke zu unterstützen. Die Wiedergabe der Visualisierungen kann auf Monitoren oder Leinwänden z. B. auf Partys, Tanzveranstaltungen, öffentlichen Vorführungen, in Theatern oder auch im Heimbereich z. B. im Wohnzimmer oder auf einem Personalcomputer erfolgen.

Bekannt ist es, Musik in elektronisch gespeicherter Form, z. B. im MP3-Format, durch eine Computersoftware wiederzugeben, die eine Frequenzanalyse der Musik durchführt und in Abhängigkeit von den analysierten Frequenzen fest zugeordnete Visualisierungen zusammen mit der Musik ausgibt. Die Visualisierungen werden dabei typischerweise auf dem Computerbildschirm und die Musik möglichst synchron über mit dem Computer verbundene Lautsprecher wiedergegeben. Um die Wiedergabe der Musik und der Visualisierungen zu synchronisieren, wird die Musik vor ihrer Wiedergabe in einem Pufferspeicher zwischengespeichert, während die Frequenzanalyse und die Synchronisation mit den Visualisierungen erfolgt. Nach erfolgter Zuordnung von Visualisierungen werden diese zusammen mit der zwischengespeicherten Musik aus dem Pufferspeicher synchron wiedergeben. Die Wiedergabe der Musik erfolgt durch die Zwischenspeicherung zeitlich verzögert.

Eine grundsätzliche Schwierigkeit besteht darin, dass eine Wiedergabe der Musik aufgrund der zunächst zu erfolgenden Frequenzanalyse nur mit einer zeitlichen Verzögerung erfolgen kann, um eine synchronisierte Wiedergabe mit Visualisierungen zu erzielen. Weitere zeitliche Verzögerungen entstehen bei der Wiedergabe der Visualisierungen durch die Zwischenspeicherung der Musik und durch die Pufferung bei der Erstellung und der Wiedergabe der Visualisierungen. Diese zum Teil erheblichen zeitlichen Verzögerungen sind insbesondere bei einer Wiedergabe von räumlich entfernt generierter Musik störend oder gar ungeeignet. Unter räumlich entfernt generierter Musik wird vorliegend Musik verstanden, die nicht aus elektronischen Daten von der die Frequenzanalyse durchführenden Software generiert wird, sondern die von einer anderen Musikquelle, wie z. B. einer Band, einem Orchester oder einem Disk Jockey, der das Musiksignal mit Schallplatten- oder CD-Spielern generiert, erzeugt wird. Diese Musik ist zum Zeitpunkt der Erstellung und Zuordnung der Visualisierungen noch unbekannt.

WO 2009/099592 A2 beschreibt ein Verfahren zur Visualisierung von Musik, ohne dass eine Vorhersage zukünftiger Musik auf Basis der Analyse von in der Vergangenheit empfangener Musik erfolgt. Vielmehr wird Musik zwischengespeichert, so dass eine Wiedergabe zusammen mit Visualisierungen nur mit zeitlicher Verzögerung erfolgen kann. Hierbei wird die Musik im Voraus eingelesen, um die Synchronisation mit Visualisierungen vorzubereiten. Eine Synchronisation von Visualisierungen mit unbekannter Musik, wie z.B. Livemusik, die nicht im Voraus eingelesen werden kann, ist nicht möglich. Insbesondere ist es nicht möglich, unbekannte Livemusik ohne zeitliche Verzögerungen durch Zwischenspeicherung der Musik oder durch Erstellung und Wiedergabe der Visualisierungen wiederzugeben.

Der Erfindung liegt die Aufgabe zugrunde, ein verbessertes Verfahren zur musiksynchronen Wiedergabe von Visualisierungen sowie eine entsprechende Vorrichtung zu schaffen.

Die erfindungsgemäße Vorrichtung wird definiert durch die Merkmale von Patentanspruch 1. Das erfindungsgemäße Verfahren wird definiert durch die Merkmale von Patentanspruch 6.

Demnach wird räumlich entfernt generierte und mit der Vorrichtung empfangene Musik analysiert, und auf Basis der analysierten Musik wird eine Vorhersage zukünftig zu empfangender Musik getroffen. Es wird also ausgehend von dem empfangenen Musiksignal eine Vorhersage getroffen, wie das empfangene Musiksignal zukünftig sein wird. Die wiederzugebenden Visualisierungen werden dem vorhergesagten Musiksignal zugeordnet, um zusammen mit der später entsprechend empfangenen Musik möglichst synchron wiedergegeben zu werden. Die Visualisierungen werden also nicht synchron mit dem analysierten Musiksignal wiedergegeben, sondern möglichst synchron mit einem zu einem späteren Zeitpunkt empfangenen Musiksignal, über das zuvor eine Vorhersage getroffen wurde. Eine Zwischenspeicherung der empfangenen Musik ist somit nicht erforderlich, weil die Analyse auf Basis eines zuvor empfangenen Musiksignals in Verbindung mit einer Vorhersage desjenigen Musiksignals, mit dem die Visualisierungen synchron ausgegeben werden sollen, erfolgt.

Hierbei kann die Analysevorrichtung einen Eingang zum Empfang räumlich entfernt generierter Musik und ggf. auch einen Ausgang zum Ausgeben der Musik an eine Wiedergabevorrichtung, wie z. B. einen Verstärker mit angeschlossenen Lautsprechern, aufweisen. Durch den Eingang ist es möglich, die erfindungsgemäße Vorrichtung an ein bestehendes Musikwiedergabesystem anzuschließen. Mit einem Musikausgang ist es möglich, die Vorrichtung zwischen Musikquelle und Lautsprechern zwischenzuschalten. Als Musikquelle sind Mikrofone zur Aufnahme von Livemusik oder das Mischpult oder die Schallplatten- bzw. CD-Spieler eines Disk Jockeys denkbar.

Die Ausgabevorrichtung für die Ausgabe der Visualisierungen ist vorzugsweise mit einem Speicher für Visualisierungsdaten verbunden, wobei aus den gespeicherten Visualisierungsdaten die Visualisierungen von den Ausgabevorrichtungen generiert werden können. In dem Speicher können Visualisierungsdaten in elektronischer Form z. B. von Bildern, 3D-Grundfiguren oder Kurzvideos hinterlegt sein, die in Abhängigkeit von dem Ergebnis der Musikanalyse individuell zu Visualisierungen kombiniert werden. Zum Beispiel können für bestimmte Frequenzbereiche oder Taktgeschwindigkeiten der analysierten Musik Rotationen, Lichteinfall oder bestimmte virtuelle Kamerafahrten für gespeicherte 3D-Grundelemente generiert werden. Auf diese Weise können aus gespeicherten Visualisierungsdaten individuell in Abhängigkeit von der jeweils wiederzugebenden Musik virtuelle Welten, wie z. B. Unterwasserwelten, technische Welten usw. erzeugt werden, ohne dass die wiederzugebende Musik ebenfalls in einem mit der Ausgabevorrichtung verbundenen Speicher zu hinterlegen ist.

Im Folgenden wird anhand der Figuren ein Ausführungsbeispiel der Erfindung näher erläutert. Es zeigen:
- Fig. 1: eine schematische Darstellung eines Ausführungsbeispiels der erfindungsgemäßen Vorrichtung,
- Fig. 2: ein Zeit-Diagramm zur Veranschaulichung des erfindungsgemäßen Verfahrens und
- Fig. 3: ein Ablauf-Diagramm zur Veranschaulichung des erfindungsgemäβen Verfahrens.

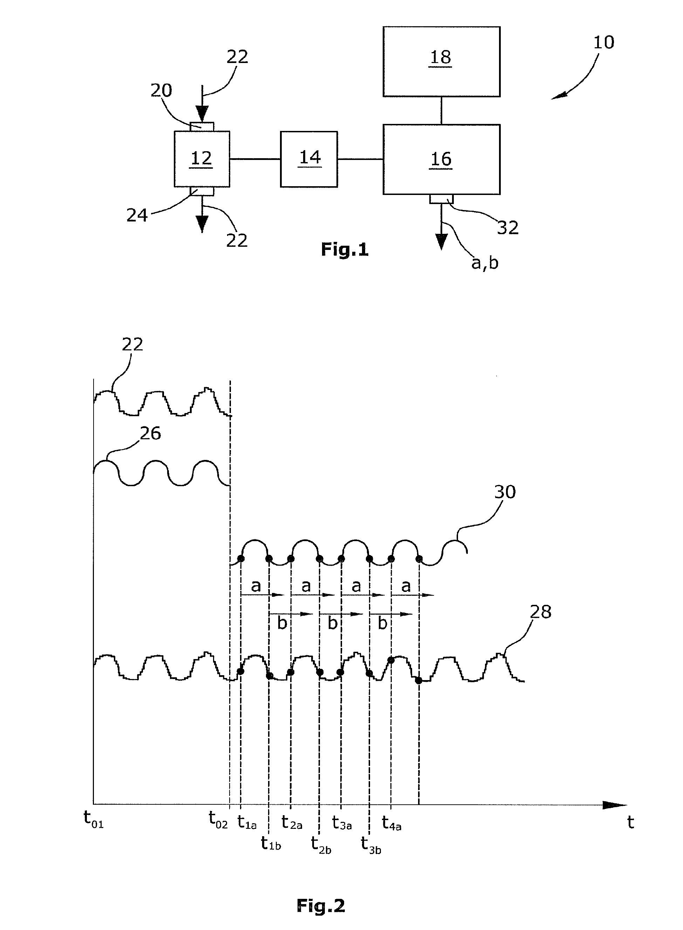

Die erfindungsgemäße Vorrichtung 10 besteht gemäß Fig. 1 aus einer Analysevorrichtung 12, einer Vorhersagevorrichtung 14, einer Ausgabevorrichtung 16 und einem Speicher 18. Die Analysevorrichtung 12 ist mit einem Stereoeingang 20 zum Empfangen von Musik 22 und mit einem Stereoausgang 24 zum Ausgeben der empfangenen Musik 22 versehen. Alternativ ist auch ein Ausführungsbeispiel ohne einen Stereoausgang 24 möglich. Die empfangene Musik 22 ist zur Veranschaulichung in Fig. 2 vereinfacht als Welle mit annähernd sinusförmigem Verlauf dargestellt. Die empfangene Musik 22 wird während eines zeitlichen Intervalls zwischen den Zeitpunkten t₀₁ und t₀₂ durch eine Spektralanalyse analysiert und anschließend ohne Zwischenspeicherung über den Stereoausgang ausgegeben. Dabei wird von der Analysevorrichtung 12 ein Analysesignal 26 generiert, das in Fig. 2 zur Veranschaulichung als reine Sinuswelle dargestellt ist, deren Periodendauer und Amplitude im Wesentlichen dem empfangenen Musiksignal 22 entspricht.

Ausgehend von dem Analysesignal 26 führt die Vorhersagevorrichtung 14 eine Vorhersage der zukünftig, also nach dem Zeitpunkt t₀₂, empfangenen Musik 28 durch. Mit zukünftig ist hierbei ein Zeitpunkt nach der jeweiligen Analyse gemeint. Die zukünftig an dem Stereoeingang 20 anliegende Musik 28 ist zur Veranschaulichung in Fig. 2 vereinfacht als eine dem analysierten Musiksignal 22 entsprechende und über den Zeitpunkt t₀₂ hinaus fortgeführte Welle mit annähernd sinusförmigem Verlauf dargestellt. Die Vorhersagevorrichtung 14 generiert auf Basis der Frequenz und der Amplitude des Analysesignals 26 ein Vorhersagesignal 30 mit entsprechender Frequenz und Amplitude. Das Vorhersagesignal 30 ist in Fig. 2 vereinfacht als kontinuierliche Fortführung des Analysesignals 26 über den Zeitpunkt t₀₂ hinaus dargestellt.

Die Ausgabevorrichtung 16 wählt zu bestimmten Zeitpunkten t₁ₐ, t₂ₐ, t₃ₐ, ... bzw. t_{1b}, t_{2b}, t_{3b} ... Visualisierungen a bzw. b aus dem Speicher 18 aus. Die Auswahl erfolgt anhand einer zuvor festgelegten Zuordnung zwischen Visualisierungsdaten aus dem Speicher 18 und bestimmten Eigenschaften des Analysesignals 26, z. B. bestimmter Frequenzen, Frequenzbereiche, Amplituden oder anderer Eigenschaften des Signalverlaufs, aus. In Fig. 2 wird eine Visualisierung a in Form eines Einzelbildes jeweils zu den Zeitpunkten t₁ₐ, t₂ₐ, t₃ₐ, usw. abgespielt, zu denen das Vorhersagesignal 30 eine maximale Steigung aufweist. Entsprechend werden Visualisierungen b in Form von Einzelbildern aus dem Speicher 18 zu den Zeitpunkten t_{1b}, t_{2b}, t_{3b} usw. mit minimaler Steigung des Vorhersagesignals 30 ausgegeben. Im Idealfall entsprechen die Signalverläufe des Vorhersagesignals 30 zu den Zeitpunkten t₁ₐ, t₂ₐ, t₃ₐ, ... bzw. t_{1b}, t_{2b}, t_{3b} ... den jeweiligen Signalverläufen des zukünftigen Musiksignals 28 zu diesen Zeitpunkten, so dass die Visualisierungen a, b synchron zu dem zukünftigen Musiksignal 28 wiedergegeben werden, ohne dass dieses analysiert wurde. Die Ausgabe der Visualisierungen a, b erfolgt über einen Monitorausgang 32 der Ausgabevorrichtung 16 z. B. an einen Computermonitor oder an eine mit dem Monitorausgang verbundenen Projektionsleinwand.

Auf diese Weise kann ausgehend von einem bereits in der Vergangenheit zwischen den Zeitpunkten t₁ₐ und t₂ₐ empfangenen Musiksignal 22 eine Auswahl und Zuordnung bestimmter Visualisierungen a, b zu dem Vorhersagesignal 30 erfolgen und die Visualisierungen auf Basis des Vorhersagesignals 30 derart ausgegeben werden, dass die Wiedergabe der Visualisierungen a, b synchron zu dem Musiksignal 28 erfolgt. Entscheidend ist hierbei, dass die Zuordnung von Visualisierungen und wiederzugebender Musik 28 zu einem Zeitpunkt erfolgt, zu welchem die Musik 28 noch nicht bekannt ist. Eine Zwischenspeicherung und verzögerte Wiedergabe der empfangenen Musik 22 ist nicht erforderlich. Die empfangene Musik 22 wird also ohne Verzögerung durch den Stereoausgang 24 ausgegeben.

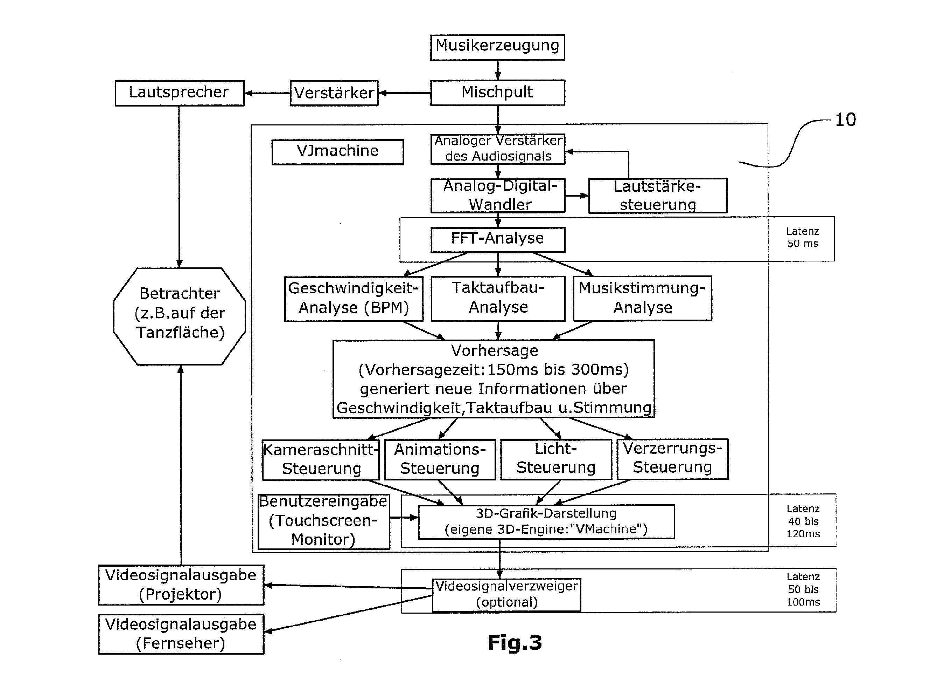

Gemäß Fig. 3 wird die erzeugte Musik an ein Mischpult eines Disk Jockeys gegeben und von dort über einen Verstärker und die Lautsprecher auf akustischem Wege an die Betrachter auf der Tanzfläche übermittelt. Von dem Mischpult wird die Musik zudem an die erfindungsgemäße Vorrichtung 10 übertragen und dort zunächst über einen A/D-Wandler in ein Digitalsignal umgewandelt. Das Digitalsignal wird durch eine FFT-Analyse (Fast Fourier Transformation) in dessen Spektralanteile zerlegt. Auf Basis des Ergebnisses der Spektralanalyse erfolgt eine Analyse der Geschwindigkeit (beats per minute), des Taktaufbaus und der Musikstimmung und nachfolgend eine Vorhersage der zukünftigen Musik in einem Zeitraum zwischen 150 ms bis 300 ms. In Abhängigkeit von der vorhergesagten Geschwindigkeit, dem Taktaufbau und der Stimmung der zukünftigen Musik werden eine Kameraschnittsteuerung, eine Animations-Steuerung, eine Lichtsteuerung und eine Verzerrungssteuerung ausgehend von den gespeicherten Visualisierungen durchgeführt und eine 3D-Grafik generiert, welche der vorhergesagten Musik in dem Vorhersagezeitraum 150 ms bis 300 ms zugeordnet wird. Während die FFT-Analyse ca. 50 ms benötigt, benötigt die Erstellung der Visualisierungen als 3D-Grafiken weitere 40 ms bis 120 ms.

Über einen optionalen Videosignalverzweiger werden die generierten Grafiken über einen Projektor oder einen Fernseher den Betrachtern auf der Tanzfläche übermittelt. Der Zeitpunkt, zu dem die generierten Visualisierungen auf die Betrachter auf der Tanzfläche einwirken, entspricht in etwa dem Vorhersagezeitraum für die vorhergesagte Musik, so dass die generierten Visualisierungen ungefähr zeitlich mit der vorhergesagten Musik auf die Betrachter auf der Tanzfläche einwirken.

## Patentansprüche

1. Vorrichtung (10) zur musiksynchronen Wiedergabe von Visualisierungen, mit einer Analysevorrichtung (12) zum Analysieren von räumlich entfernt generierter Musik (22) und mit einer Ausgabevorrichtung (16) zum Ausgeben von Visualisierungen (a, b),
**dadurch gekennzeichnet,**
**dass** eine Vorhersagevorrichtung (14) zum Vorhersagen zukünftiger Musik (28) aus der analysierten Musik (22) mit der Analysevorrichtung (12) und der Ausgabevorrichtung (16) verbunden ist, wobei die Visualisierungen (a, b) synchron zu der vorhergesagten Musik (30) ausgegeben werden.

2. Vorrichtung (10) nach Anspruch 1, **dadurch gekennzeichnet, dass** die Analysevorrichtung (12) einen Eingang (20) zum Empfangen entfernt generierter Musik (22) aufweist.

3. Vorrichtung (10) nach Anspruch 2, **dadurch gekennzeichnet, dass** die Analysevorrichtung (12) einen Ausgang (24) zum Ausgeben der Musik (22) an eine Wiedergabevorrichtung aufweist.

4. Vorrichtung (10) nach einem der Ansprüche 1 bis 3, **dadurch gekennzeichnet, dass** die Analysevorrichtung (12) mit einem Speicher (18) für Visualisierungsdaten verbunden ist.

5. Vorrichtung (10) nach Anspruch 4, **dadurch gekennzeichnet, dass** die Ausgabevorrichtung (16) zum Generieren von Visualisierungen (a, b) aus den gespeicherten Visualisierungsdaten ausgebildet ist.

6. Verfahren zum musiksynchronen Wiedergeben von Visualisierungen (a, b), mit den Schritten:
- Empfangen von räumlich entfernt generierter Musik (22),
- Analysieren der empfangenen Musik (22),
- Vorhersagen zukünftig zu empfangender Musik (28) aus der Analyse der empfangenen Musik (22),
- Zuordnen der Visualisierungen (a, b) zu der vorhergesagten Musik (30) und
- Ausgeben der zugeordneten Visualisierungen (a, b) zusammen mit zukünftig empfangener Musik (28).

7. Verfahren nach Anspruch 6, **dadurch gekennzeichnet, dass** die Analyse eine Spektralanalyse aufweist, um die Geschwindigkeit, den Takt, den Taktaufbau, bestimmte Instrumente, die Tonhöhe und/oder die Tonfarbe zu ermitteln.

8. Verfahren nach Anspruch 6 oder 7, **dadurch gekennzeichnet, dass** die Visualisierungen aus einem Speicher (18) mit Visualisierungsdaten ausgegeben werden.

9. Verfahren nach Anspruch 8, **dadurch gekennzeichnet, dass** die Visualisierungen aus den gespeicherten Visualisierungsdaten in Abhängigkeit von der Analyse der empfangenen Musik (22) generiert werden.
